# EUROPÄISCHE PATENTSCHRIFT

(11) **EP 2 160 309 B1**
(45) Veröffentlichungstag und Bekanntmachung des Hinweises auf die Patenterteilung: **07.09.2011**
(21) Anmeldenummer: 08750340.5
(22) Anmeldetag: 19.05.2008
(51) Int. Cl.: B60T 8/40, F04C 2/10, F04C 2/08, F04C 15/00

(54) **ZAHNRADPUMPENANORDNUNG**
GEAR PUMP ARRANGEMENT
DISPOSITIF DE POMPE À ENGRENAGES

(30) Priorität: 29.06.2007 DE 102007030249
(43) Veröffentlichungstag der Anmeldung: 10.03.2010
(73) Patentinhaber: Robert Bosch GmbH, 70442 Stuttgart (DE)
(72) Erfinder: SCHEPP, Rene, 71336 Waiblingen (DE); ALAZE, Norbert, 71706 Markgroeningen (DE)
(86) Internationale Anmeldenummer: PCT/EP2008/056114
(87) Internationale Veröffentlichungsnummer: WO 2009/003757

(56) Entgegenhaltungen:
- DE-A1- 10 053 991
- DE-A1- 10 244 556
- GB-A- 2 340 551

## Beschreibung

### Stand der Technik

Die vorliegende Erfindung betrifft eine Pumpenanordnung für Zahnradpumpen, welche für eine hydraulische Einheit wie z.B. eine Fahrzeugbremsanlage verwendet werden kann.

Pumpenanordnungen mit zwei Zahnradpumpen werden beispielsweise in Kraftfahrzeugen mit elektronisch geregelten Bremsanlagen verwendet. Bei derartigen Bremsanlagen wird ein Drehverhalten einzelner Räder erfasst und durch ein elektronisches Steuergerät ausgewertet, welches basierend auf dem Drehverhalten einen Bremsdruck in den einzelnen Radbremsen moduliert. Derartige Fahrzeuge weisen als elektronische Systeme insbesondere ein Antiblockiersystem (ABS) und/oder eine Antriebsschlupfregelung (ASR) und/oder ein elektronisches Stabilitätsprogramm (ESP) auf. Ein für diese Systeme notwendiger Hydraulikdruck wird dabei durch eine Pumpenanordnung bereitgestellt. Die DE 100 53 991 A1 zeigt dabei eine Pumpenanordnung mit zwei Innenzahnradpumpen, welche hintereinander auf einer gemeinsamen Antriebswelle angeordnet sind. Dabei sind jeweils die Ritzel der Innenzahnradpumpen auf der Welle angeordnet. Durch die Hintereinanderanordnung der Innenzahnradpumpen auf der gemeinsamen Antriebswelle sind insgesamt drei hochdichte Wellendichtringe notwendig, um eine Dichtheit der Pumpenanordnung zu gewährleisten. Da bei Anwendungen in Kraftfahrzeugen beispielsweise in Verbindung mit elektronischen Stabilitätsprogrammen im Saugbereich der Pumpenanordnung ein Druck bis 140 x 10⁵ Pa auftreten kann, müssen diese Wellendichtringe entsprechend so ausgelegt sein, dass sie gegen diesen hohen Druck eine Dichtheit gewährleisten. Dadurch entsteht jedoch ein großer Reibungsbetrag an den Wellendichtringen, welche den Wirkungsgrad der Pumpenanordnung deutlich herabsetzen. Ferner führt die entstehende Reibung zu einem großen Wärmeeintrag in die Pumpenanordnung.

### Vorteile der Erfindung

Die erfindungsgemäße Pumpenanordnung für eine hydraulische Einheit mit den Merkmalen des Patentanspruches 1 weist demgegenüber den Vorteil auf, dass sie nur einen Wellendichtring benötigt, welcher zudem noch nur mit einem niederen Druck beaufschlagt wird. Hierdurch kann die Pumpenanordnung einen signifikant verbesserten Wirkungsgrad aufweisen. Ferner ist die Wärmeentwicklung bei der erfindungsgemäßen Pumpenanordnung in großem Umfang reduziert. Darüber hinaus kann die erfindungsgemäße Pumpenanordnung einen einfachen und kostengünstigen Aufbau bereitstellen. Dies wird erfindungsgemäß dadurch erreicht, dass die Pumpenanordnung eine erste Innenzahnradpumpe und eine zweite Innenzahnradpumpe aufweist, welche nebeneinander angeordnet sind. Dabei weist jedes Hohlrad der beiden Innenzahnradpumpen jeweils eine Außenverzahnung auf, welche miteinander kämmen. Ferner umfasst die Pumpenanordnung ein Antriebsritzel, welches eines der beiden Hohlräder der Innenzahnradpumpen antreibt. Mit anderen Worten treibt ein Antriebsritzel die erste Innenzahnradpumpe über deren Hohlrad an und dieses Hohlrad kämmt mit dem Hohlrad der zweiten Innenzahnradpumpe, wodurch die zweite Innenzahnradpumpe angetrieben wird. Eine Wellendichtung ist dabei lediglich an einer Antriebswelle, auf welcher das Antriebsritzel angeordnet ist, notwendig. Da das Antriebsritzel außerhalb der Hohlräder der Innenzahnradpumpen angeordnet ist, muss diese Wellendichtung nur eine Abdichtung gegen einen Niederdruckbereich bereitstellen, so dass die Reibung an der Wellendichtung relativ gering ist. Dadurch kann die Pumpenanordnung bei verbessertem Wirkungsgrad kostengünstiger hergestellt werden und eine reduzierte Teilezahl aufweisen.

Die Unteransprüche zeigen bevorzugte Weiterbildungen der Erfindung.

Weiterhin bevorzugt umfasst die Pumpenanordnung eine Ablaufleitung, welche von einem Bereich zwischen den beiden Außenzahnrädern der beiden Innenzahnradpumpen aus ausgeht. Die Ablaufleitung kann beispielsweise ein austretendes Fluid abführen.

In der Ablaufleitung ist vorzugsweise ein Zwischenspeicher und ein Rückschlagventil angeordnet. Dadurch ist es möglich, dass in dem Zwischenraum zwischen den beiden Hohlrädern der Innenzahnradpumpen ein vorbestimmter Druck aufrechterhalten werden kann.

Besonders bevorzugt ist die Ablaufleitung mit einer Saugseite der ersten und/oder der zweiten Innenzahnradpumpe verbunden. Alternativ ist die Ablaufleitung mit einem Vorratsbehälter, in welchem das zu fördernde Fluid bevorratet wird, verbunden.

Um einen möglichst kompakten Aufbau bereitzustellen, ist das Antriebsritzel in einem Winkel von ca. 90° zur ersten Innenzahnradpumpe angeordnet. Alternativ sind das Antriebsritzel, die erste Innenzahnradpumpe und die zweite Innenzahnradpumpe in Reihe auf einer Linie angeordnet. Da das Antriebsritzel auch an beliebigen Positionen am Hohlrad der ersten Innenzahnradpumpe angeordnet werden kann, können insbesondere auch fahrzeugspezifische Bauraumbedingungen mittels der erfindungsgemäßen Pumpenanordnung einfach und kostengünstig erfüllt werden.

Die Anordnung der ersten Innenzahnradpumpe und der zweiten Innenzahnradpumpe zueinander ist vorzugsweise derart, dass eine Kraft, welche in der ersten Innenzahnradpumpe von innen auf das erste Hohlrad wirkt, einer Kraft, welche in der zweiten Innenzahnradpumpe von innen auf das zweite Hohlrad wirkt, entgegengesetzt ist. Dadurch wird erreicht, dass sich die Kräfte gegenseitig aufheben. Mit anderen Worten sind die resultierenden Kräfte, welche sich aus der Druckverteilung innerhalb jeder Innenzahnradpumpe auf die Hohlräder ergibt, gegeneinander gerichtet. Wenn somit der Druck innerhalb jeder Innenzahnradpumpe gleich ist, heben sich die gegeneinander gerichteten Kräfte auf. Wenn der Druck in den Innenzahnradpumpen unterschiedlich sein sollte, ergibt sich eine zumindest teilweise Aufhebung der gegeneinander gerichteten Kräfte.

Gemäß einer weiteren bevorzugten Ausgestaltung der vorliegenden Erfindung ist die Pumpenanordnung für eine zweikreisige Hydraulikanlage ausgelegt, wobei die erste Innenzahnradpumpe in den ersten Hydraulikkreis fördert und die zweite Innenzahnradpumpe in den zweiten Hydraulkkreis fördert. Besonders bevorzugt ist dabei der erste Hydraulikkreis ein erster Bremskreis einer Bremsanlage für ein Fahrzeug und der zweite Hydraulikkreis ist ein zweiter Bremskreis für die Bremsanlage. Weiter bevorzugt ist ein Druck im ersten und zweiten Hydraulikkreis gleich.

Die erfindungsgemäße Pumpenanordnung wird besonders bevorzugt in Bremsanlagen von Fahrzeugen mit insbesondere mehreren Bremskreisen verwendet. Besonders bevorzugt ist die Bremsanlage dabei mit elektronischen Bremssystemen wie einem Antiblockiersystem und/oder einer Antriebsschlupfregelung und/oder einem elektronischen Stabilitätsprogramm ausgerüstet. Das von der Pumpenanordnung geförderte Medium ist dann eine Bremsflüssigkeit.

### Zeichnung

Nachfolgend werden bevorzugte Ausführungsbeispiele der Erfindung unter Bezugnahme auf die begleitende Zeichnung im Detail beschrieben. In der Zeichnung zeigt:
- Figur 1: eine schematische Seitenansicht bei einer Pumpenanordnung gemäß einem ersten Ausführungsbeispiel der Erfindung,
- Figur 2: eine schematische Schnittansicht entlang der Linie II-II von Figur 1,
- Figur 3: eine schematische Schnittansicht entlang der Linie III-III von Figur 1, und
- Figur 4: eine schematische Seitenansicht einer Pumpenanordnung gemäß einem zweiten Ausführungsbeispiel der vorliegenden Erfindung.

### Bevorzugte Ausführungsformen der Erfindung

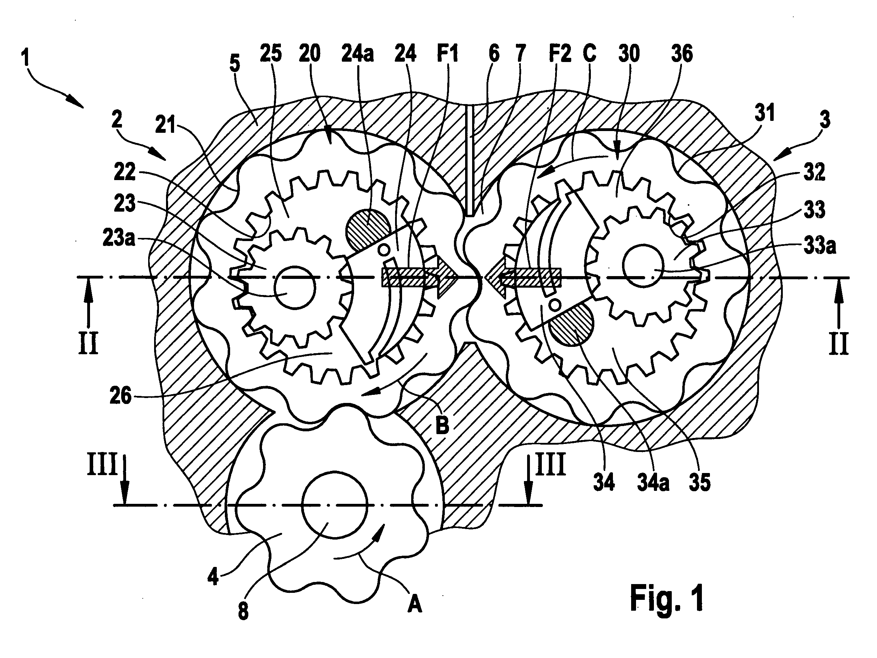

Nachfolgend wird unter Bezugnahme auf die Figuren 1 bis 3 eine Pumpenanordnung 1 gemäß einem ersten bevorzugten Ausführungsbeispiel der Erfmdung im Detail beschrieben.

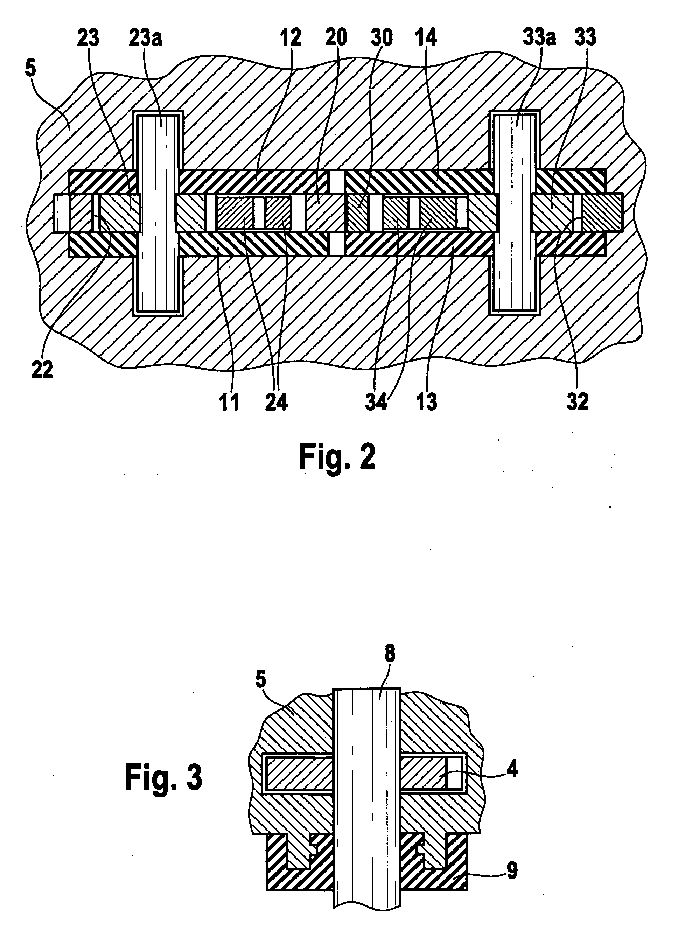

Wie aus Figur 1 ersichtlich ist, umfasst die Pumpenanordnung 1 eine erste Innenzahnradpumpe 2, eine zweite Innenzahnradpumpe 3 und ein äußeres Antriebsritzel 4, welche in einem Gehäuse 5 angeordnet sind. Das Antriebsritzel 4 ist auf einer Antriebswelle 8 gelagert. Die erste Innenzahnradpumpe 2 umfasst ein erstes Hohlrad 20 mit einer Außenverzahnung 21 und einer Innenverzahnung 22, ein erstes Ritzel 23 und ein erstes sichelförmiges Segmentstück 24. Das erste sichelförmige Segmentstück 24 stützt sich an einer Abstützung 24a ab und dichtet in der ersten Innenzahnradpumpe 2 einen Saugbereich 25 von einem Druckbereich 26 ab. Das erste Ritzel 23 ist auf einer Ritzelwelle 23a fixiert, welche in einem Gehäuse 5 der Pumpenanordnung gelagert ist (vgl. Figur 2).

Die zweite Innenzahnradpumpe 3 ist im Wesentlichen gleich wie die erste Innenzahnradpumpe 2 aufgebaut und umfasst ein zweites Hohlrad 30 mit einer Außenverzahnung 31 und einer Innenverzahnung 32. Ein zweites Ritzel 33 ist auf einer Ritzelwelle 33a und ein zweites sichelförmiges Segmentstück 34, welches sich an einer Abstützung 34a abstützt, sind im Inneren des zweiten Hohlrads angeordnet. Wie aus Figur 1 ersichtlich ist, ist die zweite Innenzahnradpumpe 3 dabei um 180° gedreht zur ersten Innenzahnradpumpe 2 angeordnet. Durch diese Anordnung wird es möglich, dass sich die Hydraulikkräfte, welche von innen auf die Hohlräder 20, 30 der Innenzahnradpumpen wirken, gegenseitig aufheben und somit nicht zu Reibungsverlusten zwischen den Hohlrädern 20, 30 und dem Gehäuse 5 führen können.

In Figur 1 ist die Antriebsrichtung des Antriebsritzels 4 mit dem Pfeil A gekennzeichnet, die Drehrichtung des ersten Hohlrads 20 durch den Pfeil B und die Drehrichtung des zweiten Hohlrads 30 durch den Pfeil C gekennzeichnet.

Wie aus Figur 2 ersichtlich ist, erfolgt eine seitliche Abdichtung der Innenzahnradpumpen 2, 3 mittels vier Axialscheiben 11, 12, 13, 14, welche zwischen den Bauteilen der Innenzahnradpumpen und dem Gehäuse 5 angeordnet sind. Die Ritzelwelle 23a und die Ritzelwelle 33a der beiden Ritzel 23, 33 der Innenzahnradpumpen sind dabei im Gehäuse 5 gelagert.

Wie in Figur 1 dargestellt, ist eine Ablaufleitung 6 vorgesehen, welche in einen Raum 7 zwischen den Außenseiten des ersten Hohlrads 20 und des zweiten Hohlrads 30 mündet. Die Ablaufleitung 6 kann eine eventuell auftretende Leckage über die Dichtspalte der Pumpenanordnung zu einem Vorratsbehälter (nicht gezeigt) abführen.

Da ein Antrieb der Pumpenanordnung 1 über das externe Antriebsritzel 4 erfolgt, ist es für eine Abdichtung der Innenzahnradpumpen 2, 3 nicht mehr notwendig, an den Ritzelwellen 23a, 33a hochdichte Wellenabdichtungen im Stand der Technik vorzusehen. Die Ritzelwellen 23a, 33a können im Gehäuse gelagert werden. Somit kommt die gesamte Pumpenanordnung 1 nur mit einer Wellenabdichtung 9 aus, welche zudem noch nur gegen einen Niederdruckbereich abdichten muss. Da die Innenzahnradpumpen 2, 3 jeweils über das Hohlrad 20 bzw. 30 angetrieben werden, ist zur Abdichtung der Saugseite jeweils kein Wellendichtring erforderlich. Insbesondere wenn auf der Saugseite systembedingte hohe Drücke auftreten, kann aufgrund der fehlenden Wellendichtung somit das Auftreten hoher Reibkräfte vermieden werden.

Ferner hat die Anordnung der beiden Innenzahnradpumpen 2, 3 derart zueinander, dass die sichelförmigen Segmentstücke 24, 34 einander gegenüberliegend angeordnet sind, den Vorteil, dass sich die Hydraulikkräfte, welche auf die Hohlräder der Innenzahnradpumpen wirken und üblicherweise im Gehäuse gelagert werden müssen, sich gegenseitig aufheben. Die Hydraulikkräfte sind in Figur 1 mit den Pfeilen F1 und F2 gekennzeichnet. Dadurch werden Reibungsverluste zwischen den Hohlrädern 20, 30 und dem Gehäuse 5 vermieden. Die Außenverzahnung der Hohlräder 20, 30 ist dabei derart ausgebildet, dass sowohl die zum Antrieb der Pumpenanordnung notwendigen Drehmomente als auch die gegeneinander wirkenden Hydraulikkräfte aufgenommen werden können. Ferner müssen die beiden Hohlräder 20, 30 gegeneinander abrollen können. Daher ist die Außenverzahnung 21 des ersten Hohlrads 20 und die Außenverzahnung 31 des zweiten Hohlrads 30 wie in Figur 1 gezeigt wellenförmig ausgebildet.

Im Betrieb der Pumpenanordnung 1 kann die Pumpenanordnung nach einem Bremseingriff, welcher z.B. von einem Bremssteuersystem wie einem Antiblockiersystem oder einem elektronischen Stabilitätsprogramm, vorgenommen wurde, nach Beendigung des Regeleingriffs weiterbetrieben werden, um die restlichen, im System verbliebenen Fluidmengen zurückzufördern.

Der Druckbereich 26 der ersten Innenzahnradpumpe 2 ist dabei mit einem ersten Bremskreis eines Fahrzeugs verbunden und der Druckbereich 36 der zweiten Innenzahnradpumpe 3 ist mit einem zweiten Bremskreis des Fahrzeugs verbunden. Die Drücke im ersten und zweiten Bremskreis sind dabei gleich.

Die erfindungsgemäße Pumpenanordnung 1 weist somit einen sehr einfachen und kostengünstigen Aufbau auf. Insbesondere kann durch den Verzicht auf aufwendige Wellenabdichtungen an einer Antriebswelle der Innenzahnradpumpen das Auftreten einer großen Reibung im Bereich der Wellendichtringe vermieden werden und somit ein Wirkungsgrad der Pumpenanordnung deutlich gesteigert werden. Ferner kann durch die um 180° zueinander verdrehte Anordnung der beiden Innenzahnradpumpen bei einem gleichen Druckniveau in den beiden Bremskreisen eine gegenseitige Aufhebung der Hydraulikkräfte an den Innenzahnradpumpen erreicht werden. Dadurch kann ein Wirkungsgrad der Pumpe noch weiter verbessert werden.

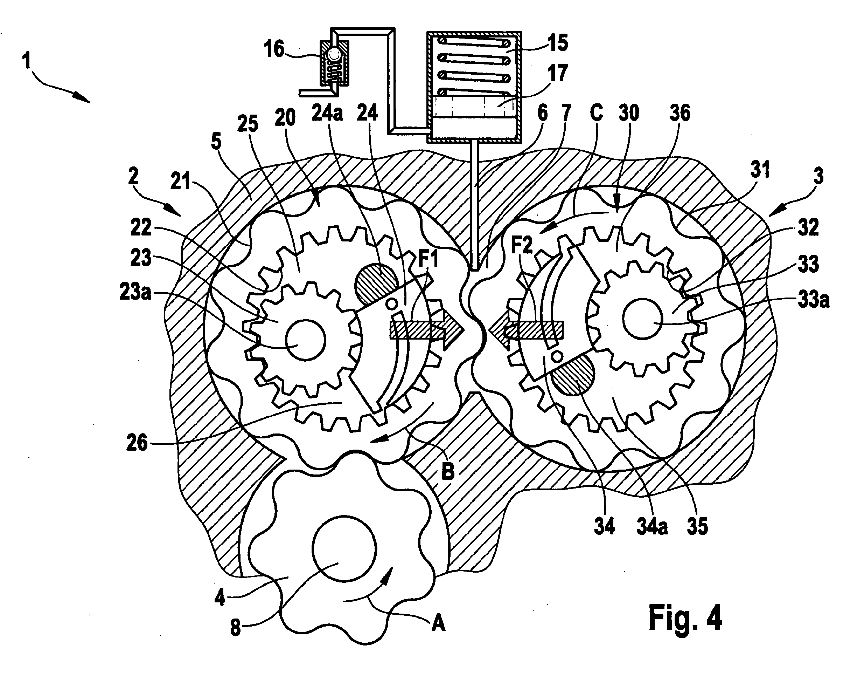

Nachfolgend wird unter Bezugnahme auf Figur 4 eine Pumpenanordnung 1 gemäß einem zweiten Ausführungsbeispiel der Erfindung im Detail beschrieben. Gleiche bzw. funktional gleiche Teile der Pumpenanordnung sind dabei mit den gleichen Bezugszeichen wie im ersten Ausführungsbeispiel bezeichnet.

Die Pumpenanordnung des zweiten Ausführungsbeispiels entspricht im Wesentlichen der des ersten Ausführungsbeispiels, wobei in der Ablaufleitung 6 zusätzlich ein Zwischenspeicher 15 und ein Rückschlagventil 16 angeordnet ist. Der Zwischenspeicher 15 umfasst einen federbelasteten Kolben 17. Der Zwischenspeicher 15 dient als Niederdruckspeicher, welcher über das Rückschlagventil 16 mit einem saugseitigen Druckraum einer der Innenzahnradpumpen verbunden ist. Dabei wird üblicherweise nach einem Bremseingriff durch eine Systemsteuerung, bei welchem die Pumpenanordnung 1 betrieben worden ist, die Pumpenanordnung 1 weiter betrieben, um die restlichen, im System verbliebenen Fluidmengen zurückzufördern. Dabei wird dann auch der Zwischenspeicher 15 von dem während des Betriebes aufgenommenen Leckvolumen entleert. Ansonsten entspricht dieses Ausführungsbeispiel dem vorhergehenden Ausführungsbeispiel, so dass auf die dort gegebene Beschreibung verwiesen werden kann.

## Patentansprüche

1. Pumpenanordnung für eine hydraulische Einheit, insbesondere eine Fahrzeugbremsanlage, umfassend
- eine erste Innenzahnradpumpe (2) mit einem ersten Hohlrad (20), einem ersten Ritzel (23) und einem ersten sichelförmigen Segmentstück (24),
- eine zweite Innenzahnradpumpe (3) mit einem zweiten Hohlrad (30), einem zweiten Ritzel (33) und einem zweiten sichelförmigen Segmentstück (34) und
- einem Antriebsritzel (4),
- wobei das erste Hohlrad (20) eine Außenverzahnung (21) aufweist und das zweite Hohlrad (30) eine Außenverzahnung (31) aufweist und die erste und zweite Innenzahnradpumpe (2, 3) derart nebeneinander angeordnet sind, dass die Außenverzahnung (21) des ersten Hohlrads (20) mit der Außenverzahnung (31) des zweiten Hohlrads (30) kämmt,
- wobei das Antriebsritzel (4) mit der Außenverzahnung (21) des ersten Hohlrads (20) kämmt und das Antriebsritzel (4) mit einer Antriebswelle (8) verbunden ist, um das Antriebsritzel (4) anzutreiben, und
- wobei an der Antriebswelle (8) eine Wellendichtung (9) für eine Abdichtung gegen eine äußere Umgebung angeordnet ist.

2. Pumpenanordnung nach Anspruch 1, ferner umfassend eine Ablaufleitung (6), welche in einem Raum (7) zwischen der ersten und zweiten Innenzahnradpumpe (2, 3) mündet, um Leckagefluid abzuführen.

3. Pumpenanordnung nach Anspruch 2, **dadurch gekennzeichnet, dass** in der Ablaufleitung (6) ein Zwischenspeicher (15) und ein Rückschlagventil (16) angeordnet ist.

4. Pumpenanordnung nach Anspruch 2 oder 3, **dadurch gekennzeichnet, dass** die Ablaufleitung (6) mit einem Saugbereich (25) der ersten Innenzahnradpumpe (2) und/oder einem Saugbereich (35) der zweiten Innenzahnradpumpe (3) verbunden ist.

5. Pumpenanordnung nach Anspruch 2 oder 3, **dadurch gekennzeichnet, dass** die Ablaufleitung (6) mit einem Vorratsbehälter für das zu fördernde Fluid verbunden ist.

6. Pumpenanordnung nach einem der vorhergehenden Ansprüche, **dadurch gekennzeichnet, dass** das Antriebsritzel (4) und die erste Innenzahnradpumpe (2) zueinander in einem Winkel von ca. 90° angeordnet sind.

7. Pumpenanordnung nach einem der Ansprüche 1 bis 5, **dadurch gekennzeichnet, dass** das Antriebsritzel (4), die erste Innenzahnradpumpe (2) und die zweite Zahnradpumpe (3) nebeneinander auf einer Linie in Reihe angeordnet sind.

8. Pumpenanordnung nach einem der vorhergehenden Ansprüche, **dadurch gekennzeichnet, dass** die erste Innenzahnradpumpe (2) und die zweite Innenzahnradpumpe (3) derart zueinander angeordnet sind, dass eine erste Kraft (F1), welche von innen auf das erste Hohlrad (20) wirkt, einer zweiten Kraft (F2), welche von innen auf das zweite Hohlrad (30) wirkt, entgegengesetzt ist.

9. Pumpenanordnung nach einem der vorhergehenden Ansprüche, **dadurch gekennzeichnet, dass** die erste Innenzahnradpumpe (2) in einen ersten Hydraulikkreis fördert und die zweite Innenzahnradpumpe (3) in einen zweiten Hydraulikkreis fördert.

10. Pumpenanordnung nach Anspruch 9, **dadurch gekennzeichnet, dass** ein Druck im ersten Hydraulikkreis gleich einem Druck im zweiten Hydraulikkreis ist.

11. Bremsanlage für ein Fahrzeug, umfassend eine Pumpenanordnung (1) nach einem der vorhergehenden Ansprüche.

## Claims

1. Pump arrangement for a hydraulic unit, in particular a vehicle brake system, comprising
- a first internal gear pump (2) with a first ring wheel (20), with a first pinion (23) and with a first sickle-shaped quadrant piece (24),
- a second internal gear pump (3) with a second ring wheel (30), with a second pinion (33) and with a second sickle-shaped quadrant piece (34), and
- a drive pinion (4),
- the first ring wheel (20) having an external toothing (21) and the second ring wheel (30) an external toothing (31), and the first and the second internal gear pump (2, 3) being arranged next to one another in such a way that the external toothing (21) of the first ring wheel (20) meshes with the external toothing (31) of the second ring wheel (30),
- the drive pinion (4) meshing with the external toothing (21) of the first ring wheel (20) and the drive pinion (4) being connected to a drive shaft (8) in order to drive the drive pinion (4), and
- a shaft seal (9) for sealing off with respect to external surroundings being arranged on the drive shaft (8).

2. Pump arrangement according to Claim 1, furthermore comprising an outflow line (6) which issues in a space (7) between the first and the second internal gear pump (2, 3), in order to discharge leakage fluid.

3. Pump arrangement according to Claim 2, **characterized in that** an intermediate accumulator (15) and a non-return valve (16) are arranged in the outflow line (6).

4. Pump arrangement according to Claim 2 or 3, **characterized in that** the outflow line (6) is connected to a suction region (25) of the first internal gear pump (2) and/or to a suction region (35) of the second internal gear pump (3).

5. Pump arrangement according to Claim 2 or 3, **characterized in that** the outflow line (6) is connected to a reservoir for the fluid to be conveyed.

6. Pump arrangement according to one of the preceding claims, **characterized in that** the drive pinion (4) and the first internal gear pump (2) are arranged at an angle of approximately 90° to one another.

7. Pump arrangement according to one of Claims 1 to 5, **characterized in that** the drive pinion (4), the first internal gear pump (2) and the second gear pump (3) are arranged in series next to one another on one line.

8. Pump arrangement according to one of the preceding claims, **characterized in that** the first internal gear pump (2) and the second internal gear pump (3) are arranged with respect to one another in such a way that a first force (F1) which acts upon the first ring wheel (20) from inside is opposite to a second force (F2) which acts upon the second ring wheel (30) from inside.

9. Pump arrangement according to one of the preceding claims, **characterized in that** the first internal gear pump (2) conveys into a first hydraulic circuit and the second internal gear pump (3) conveys into a second hydraulic circuit.

10. Pump arrangement according to Claim 9, **characterized in that** a pressure in the first hydraulic circuit is equal to a pressure in the second hydraulic circuit.

11. Brake system for a vehicle, comprising a pump arrangement (1) according to one of the preceding claims.

## Revendications

1. Agencement de pompe pour une unité hydraulique, notamment une installation de frein de véhicule, comprenant :
- une première pompe à engrenage interne (2) avec une première couronne (20), un premier pignon (23) et un premier élément de segment (24) en forme de croissant,
- une deuxième pompe à engrenage interne (3) avec une deuxième couronne (30), un deuxième pignon (33) et un deuxième élément de segment (34) en forme de croissant, et
- un pignon d'entraînement (4),
- la première couronne (20) présentant une denture extérieure (21) et la deuxième couronne (30) présentant une denture extérieure (31) et la première et la deuxième pompe à engrenage interne (2, 3) étant disposées l'une à côté de l'autre de telle sorte que la denture extérieure (21) de la première couronne (20) s'engrène avec la denture extérieure (31) de la deuxième couronne (30),
- le pignon d'entraînement (4) s'engrenant avec la denture extérieure (21) de la première couronne (20) et le pignon d'entraînement (4) étant connecté à un arbre d'entraînement (8) afin d'entraîner le pignon d'entraînement (4), et
- un joint d'étanchéité pour arbre (9) étant disposé sur l'arbre d'entraînement (8) pour réaliser l'étanchéité vis-à-vis d'un environnement extérieur.

2. Agencement de pompe selon la revendication 1, comprenant en outre une conduite d'écoulement (6) qui débouche dans un espace (7) entre la première et la deuxième pompe à engrenage interne (2, 3), afin d'évacuer le fluide de fuite.

3. Agencement de pompe selon la revendication 2, **caractérisé en ce qu'**un accumulateur intermédiaire (15) et une soupape de non retour (16) sont disposés dans la conduite d'écoulement (6).

4. Agencement de pompe selon la revendication 2 ou 3, **caractérisé en ce que** la conduite d'écoulement (6) est connectée à une région d'aspiration (25) de la première pompe à engrenage interne (2) et/ou à une région d'aspiration (35) de la deuxième pompe à engrenage interne (3).

5. Agencement de pompe selon la revendication 2 ou 3, **caractérisé en ce que** la conduite d'écoulement (6) est connectée à un réservoir pour le fluide à refouler.

6. Agencement de pompe selon l'une quelconque des revendications précédentes, **caractérisé en ce que** le pignon d'entraînement (4) et la première pompe à engrenage interne (2) sont disposés suivant un angle d'environ 90° l'un par rapport à l'autre.

7. Agencement de pompe selon l'une quelconque des revendications 1 à 5, **caractérisé en ce que** le pignon d'entraînement (4), la première pompe à engrenage interne (2) et la deuxième pompe à engrenage (3) sont disposés en rangée juxtaposée sur une ligne.

8. Agencement de pompe selon l'une quelconque des revendications précédentes, **caractérisé en ce que** la première pompe à engrenage interne (2) et la deuxième pompe à engrenage interne (3) sont disposées l'une par rapport à l'autre de telle sorte qu'une première force (F1), qui agit depuis l'intérieur sur la première couronne (20), soit opposée à une deuxième force (F2) qui agit depuis l'intérieur sur la deuxième couronne (30).

9. Agencement de pompe selon l'une quelconque des revendications précédentes, **caractérisé en ce que** la première pompe à engrenage interne (2) refoule dans un premier circuit hydraulique et la deuxième pompe à engrenage interne (3) refoule dans un deuxième circuit hydraulique.

10. Agencement de pompe selon la revendication 9, **caractérisé en ce qu'**une pression dans le premier circuit hydraulique est égale à une pression dans le deuxième circuit hydraulique.

11. Installation de frein pour un véhicule, comprenant un agencement de pompe (1) selon l'une quelconque des revendications précédentes.
